# EUROPEAN PATENT APPLICATION

(11) **EP 4 804 263 A1**
(43) Date of publication of application: **09.09.2026**
(21) Application number: 25889503.6
(22) Date of filing: 09.09.2025
(51) Int. Cl.: H01M 10/04

(54) **ELECTRODE ASSEMBLY HOLDER AND ELECTRODE TRAY COMPRISING SAME**

(30) Priority: 08.11.2024 KR 20240158506
(71) Applicant: LG Energy Solution, Ltd., Seoul 07335 (KR)
(72) Inventor: KIM, Jin Hyeok, Daejeon 34122 (KR); JEON, Jae Hyun, Daejeon 34122 (KR)
(74) Representative: Goddar, Heinz J.
(86) International application number: PCT/KR2025/014027
(87) International publication number: WO 2026/100951

(57) **Abstract**

According to exemplary embodiments, an electrode assembly holder is provided. The electrode assembly holder includes: a hollow cylindrical side wall part, wherein the side wall part includes a first portion defining an accommodation space, a second portion defining a discharge space, and a third portion interposed between the first portion and the second portion; a support surrounded by the third portion and spaced apart from the third portion; and bridges connecting the third portion and the support.

## Description

### [Technical Field]

The present disclosure relates to an electrode assembly holder and an electrode tray. This application claims the benefit of Korean Patent Application No. 10-2024-0158506, filed on November 8, 2024, the disclosure of which is incorporated herein by reference.

### [Background]

Unit cells of secondary batteries are classified into cylindrical, prismatic, and pouch-types according to the type of case. In the case of cylindrical batteries, a separator, which is an insulator, is interposed between a positive electrode and a negative electrode coated with an active material, and they are wound to form a jelly roll-type electrode assembly, which is then inserted into a battery can to constitute the battery.

As a type of cylindrical battery, a tab-less cylindrical battery cell including a tab-less electrode assembly has been proposed. The tab-less electrode assembly has a structure in which a positive electrode including segmented portions of a non-coated part on one long side and a negative electrode including segmented portions of a non-coated part on one long side are wound. The segmented portions of the non-coated part of the positive electrode protrude toward the lower end of the electrode assembly, and the segmented portions of the non-coated part of the negative electrode protrude toward the upper end of the electrode assembly. The segmented portions of the non-coated parts protruding toward the upper end and lower end are welded to the upper end current collecting plate and the lower end current collecting plate, respectively, and can be inserted into the battery can.

In the manufacturing process of tab-less cylindrical battery cells, it is necessary to transport the wound jelly roll-type electrode assemblies. In order to prevent damage to the segmented portions of the non-coated parts at both ends of the tab-less electrode assembly, the tab-less electrode assemblies have been transported by horizontally loading them on a tray. However, there was a problem that existing equipment had to be modified or new equipment had to be manufactured in situations where vertical loading was required. Accordingly, a new type of transport tray capable of vertically loading and transporting tab-less electrode assemblies without damaging the non-coated parts has become necessary.

### [Summary]

### [Technical Problem]

The problem to be solved by the technical concept of the present disclosure is to provide an electrode assembly holder capable of storing and transporting an electrode assembly without damage.

### [Technical Solution]

According to exemplary embodiments of the present disclosure for solving the above-described problem, an electrode assembly holder is provided. The electrode assembly holder may include: a hollow cylindrical side wall part, wherein the side wall part includes a first portion defining an accommodation space, a second portion defining a discharge space, and a third portion interposed between the first portion and the second portion; a support surrounded by the third portion and spaced apart from the third portion; and bridges connecting the third portion and the support.

The width of the accommodation space may be different from the width of the discharge space.

The width of the accommodation space may be greater than the width of the discharge space.

The width of the accommodation space may be 18.0 mm or more. The width of the accommodation space may be 24.0 mm or less. The width of the discharge space may be 13.5 mm or more. The width of the discharge space may be 19.5 mm or less.

The inner surface of the third portion may be aligned with the inner surface of the second portion in a vertical direction.

The bridges may be arranged at equal spacings.

The electrode assembly holder may further include: a first hole defined by the inner surface of the support; and second holes between the support and the third portion.

The second holes may be separated by the bridges.

Each of the second holes may be defined by the outer surface of the support, the inner surface of the third portion, and side surfaces of the bridges.

The number of second holes may be 2 or more and 10 or less.

The support may have a ring shape.

The accommodation space may communicate with the discharge space through the first hole and the second holes.

The number of bridges may be 2 or more and 10 or less.

The accommodation space may be configured to accommodate a jelly roll-type electrode assembly. The electrode assembly may include segmented portions of a non-coated part folded toward a winding center at both ends. The bridges may support the segmented portions of the non-coated part of the electrode assembly.

According to exemplary embodiments of the present disclosure for solving the above-described problem, an electrode tray is provided. The electrode tray may include: the afore-mentioned plurality of electrode assembly holders; and a bottom plate supporting the electrode assembly holders from below.

### [Advantageous Effects]

According to exemplary embodiments of the present disclosure, tab-less electrode assemblies can be vertically loaded and transported on a tray. By providing holes in the bottom part of the electrode tray, the electrode assemblies can be transported without damage to the electrode assemblies.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a development view showing a state before winding of electrodes according to exemplary embodiments.
FIG. 2 is a cross-sectional view showing a jelly roll-type electrode assembly according to exemplary embodiments.
FIG. 3 is a perspective view showing an electrode tray according to exemplary embodiments.
FIG. 4 is a cross-sectional view showing an electrode assembly holder according to exemplary embodiments.
FIG. 5 is a cross-sectional view showing an electrode assembly holder according to exemplary embodiments.
FIG. 6 is a flowchart showing a method of manufacturing a cylindrical battery according to exemplary embodiments.
FIG. 7 is a cross-sectional view showing a cylindrical battery according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and do not represent all of the technical ideas of the disclosure, and that there may be various equivalents and modifications that may be substituted for them at the time of filing the present application.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

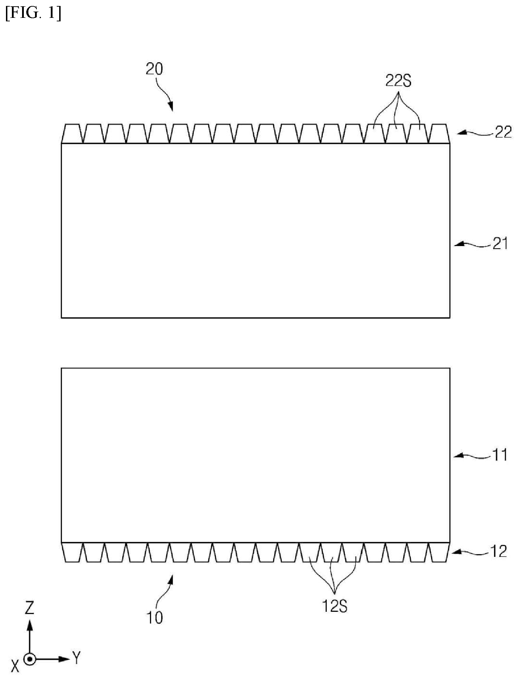

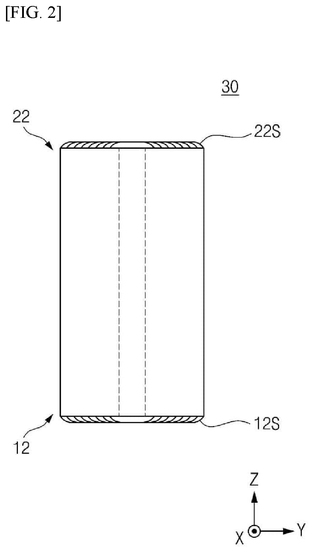

FIG. 1 is a development view showing electrodes 10, 20 according to exemplary embodiments. FIG. 1 shows the electrodes 10, 20 in a state before winding. FIG. 2 is a cross-sectional view showing a jelly roll-type electrode assembly 30 according to exemplary embodiments.

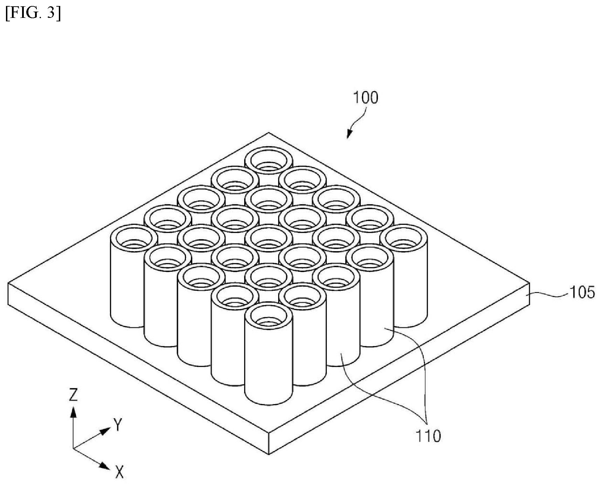

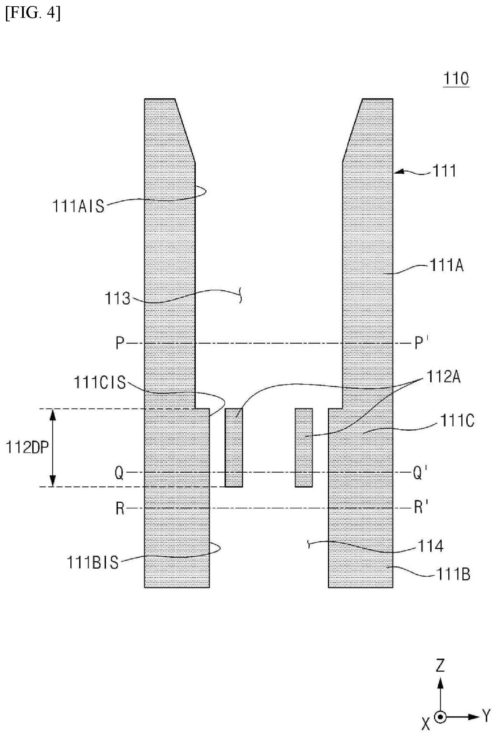

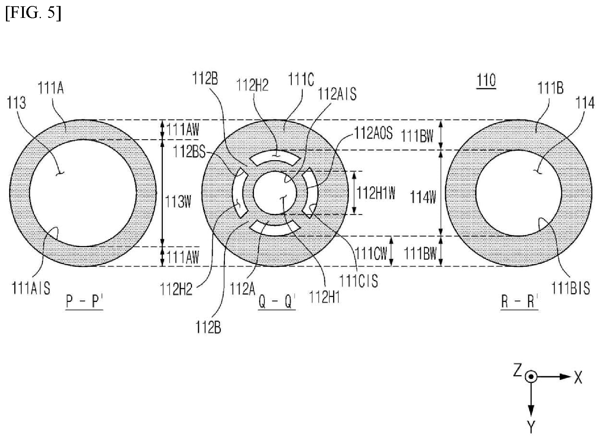

FIG. 3 is a perspective view showing an electrode tray 100 according to exemplary embodiments. FIG. 4 is a cross-sectional view showing a holder 110 of the electrode tray 100 according to exemplary embodiments. FIG. 5 is a cross-sectional view showing a holder 110 of the electrode tray 100 according to exemplary embodiments. FIG. 5 shows cross-sections along P-P', Q-Q', and R-R' of FIG. 4.

Referring to FIGS. 1 and 2, the jelly roll-type electrode assembly 30 may be formed by sequentially stacking a first electrode 10, a separator, a second electrode 20, and a separator to form an electrode stack, and then winding the electrode stack along the longitudinal direction (Y direction). The winding axis portion of the jelly roll-type electrode assembly 30 may be empty. The longitudinal direction (Y direction) of each of the first electrode 10 and the second electrode 20 may correspond to the circumferential direction of the jelly roll-type electrode assembly 30. The width direction (Z direction) of each of the first electrode 10 and the second electrode 20 may correspond to the winding axis direction of the jelly roll-type electrode assembly 30. The normal direction (X direction) of the surface of each of the first electrode 10 and the second electrode 20 may correspond to the radial direction of the jelly roll-type electrode assembly 30.

The first electrode 10 may include a current collector and an active material layer. The portion of the first electrode 10 coated with the active material may be a coated part 11. The portion of the first electrode 10 not coated with the active material may be a non-coated part 12. The current collector may be exposed in the non-coated part 12.

The non-coated part 12 may include segmented portions 12S arranged in the Y direction. The segmented portions 12S may be folded independently. In the jelly roll-type electrode assembly 30, each of the segmented portions 12S may be folded toward the winding center of the jelly roll-type electrode assembly 30.

According to exemplary embodiments, the first electrode 10 may be a positive electrode. The first electrode 10 may include an aluminum foil as a current collector. The first electrode 10 may include, as a positive electrode active material, LiCoO₂, LiNiO₂, LiNi₁₋ₓCoₓO₂ (0.2≤x≤0.5), LiNi_{1/3}Mn_{1/3}Co_{1/3}O₂, LiNi₀.₅Mn₀.₅O₂, LiMn₂O₄, LiMn₂₋ₓMₓO₄ (M is Al or Li, etc.), or LiFePO₄, and the like.

The second electrode 20 may include a current collector and an active material layer. The portion of the second electrode 20 coated with the active material may be a coated part 21. The portion of the second electrode 20 not coated with the active material may be a non-coated part 22. The current collector may be exposed in the non-coated part 22.

The non-coated part 22 may include segmented portions 22S arranged in the Y direction. The segmented portions 22S may be folded independently. In the jelly roll-type electrode assembly 30, each of the segmented portions 22S may be folded toward the winding center of the jelly roll-type electrode assembly 30.

According to exemplary embodiments, the second electrode 20 may be a negative electrode. The second electrode 20 may include a copper foil or a nickel foil as a current collector. The second electrode 20 may include, as a negative electrode active material, lithium metal, graphite, coke, silicon, tin, and the like.

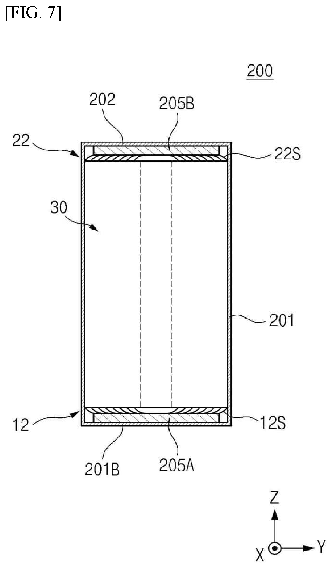

The electrode assembly 30 may be a tab-less type electrode assembly. The electrode assembly 30 may include segmented portions 12S of the non-coated part 12 of the first electrode 10 protruding toward the lower end of the electrode assembly 30, and segmented portions 22S of the non-coated part 22 of the second electrode 20 protruding toward the upper end of the electrode assembly 30. Each of the segmented portions 12S, 22S of the non-coated parts 12, 22 may be folded toward the winding center of the electrode assembly 30. Each of the segmented portions 12S, 22S of the non-coated parts 12, 22 of the electrode assembly 30 may be welded to current collecting plates (205A, 205B in FIG. 7) in a cell assembly process.

Referring to FIGS. 1 to 5, the electrode tray 100 may be a tray for transporting the jelly roll-type electrode assembly 30. For example, the electrode tray 100 may be used for transporting the electrode assembly 30 after the winding process of the electrode assembly 30 to insert the electrode assembly 30 into a can. The electrode tray 100 may include a plurality of holders 110 and a bottom plate 105. The plurality of holders 110 may be disposed on the bottom plate 105. The bottom plate 105 may support the plurality of holders 110 at the lower part.

The holder 110 may be configured to accommodate the electrode assembly 30. The electrode assembly 30 may be loaded into the holder 110 with the non-coated part 12 of the first electrode 10 facing downward in the Z direction and the non-coated part 22 of the second electrode 20 facing upward in the Z direction.

The holder 110 may include a side wall part 111, a support 112A, bridges 112B, an accommodation space 113, and a discharge space 114.

The side wall part 111 may include a first portion 111A, a second portion 111B, and a third portion 111C. The third portion 111C may be interposed between the first portion 111A and the second portion 111B.

The width 111AW of the first portion 111A may be different from the width 111BW of the second portion 111B. The width 111AW of the first portion 111A may be smaller than the width 111BW of the second portion 111B. The first portion 111A may include an inner surface 111AIS. The second portion 111B may include an inner surface 111BIS. The inner surface 111AIS of the first portion 111A may not be aligned with the inner surface 111BIS of the second portion 111B in the Z direction.

The width 111CW of the third portion 111C may be different from the width 111AW of the first portion 111A. The width 111CW of the third portion 111C may be greater than the width 111AW of the first portion 111A. The width 111CW of the third portion 111C may be substantially the same as the width 111BW of the second portion 111B. The third portion 111C may include an inner surface 111CIS. The inner surface 111CIS of the third portion 111C may not be aligned with the inner surface 111AIS of the first portion 111A in the Z direction. The inner surface 111CIS of the third portion 111C may be aligned with the inner surface 111BIS of the second portion 111B in the Z direction.

The first portion 111A of the side wall part 111 may include a portion whose width decreases at the upper part. The first portion 111A of the side wall part 111 may include an inclined inner surface at the upper part. When mounting the electrode assembly 30 in the holder 110, if the electrode assembly 30 is misaligned with the holder 110, the electrode assembly 30 may move along the inclined inner surface at the upper part of the first portion 111A to be loaded into the accommodation space 113.

The support 112A may be surrounded by the third portion 111C. The support 112A may be spaced apart from the third portion 111C. According to exemplary embodiments, the support 112A may have a ring shape. According to exemplary embodiments, the center of the support 112A may coincide with the center of the third portion 111C.

The bridges 112B may connect the support 112A and the third portion 111C. The bridges 112B may be spaced apart from each other. According to exemplary embodiments, the bridges 112B may be arranged at regular spacings. The support 112A and each of the bridges 112B may have substantially the same thickness 112DP.

The first portion 111A of the side wall part 111 may support the jelly roll-type electrode assembly 30 from the side. The support 112A and the bridges 112B may support the jelly roll-type electrode assembly 30 at the lower part. The support 112A and the bridges 112B may support the plurality of segmented portions 12S of the non-coated part 12 of the first electrode 10 of the electrode assembly 30.

FIG. 5 shows an embodiment including four bridges 112B, but the number of bridges 112B is not limited thereto. The number of bridges 112B may be changed according to the size or shape of the electrode assembly 30. According to exemplary embodiments, the number of bridges 112B may be 2 or more. According to exemplary embodiments, the number of bridges 112B may be 4 or more. According to exemplary embodiments, the number of bridges 112B may be 6 or more. According to exemplary embodiments, the number of bridges 112B may be 20 or less. According to exemplary embodiments, the number of bridges 112B may be 10 or less. According to exemplary embodiments, the number of bridges 112B may be 8 or less.

The accommodation space 113 may be defined by the first portion 111A of the side wall part 111. The discharge space 114 may be defined by the second portion 111B of the side wall part 111.

The accommodation space 113 may be a space for accommodating the jelly roll-type electrode assembly 30. The accommodation space 113 may have a width 113W (or diameter). According to exemplary embodiments, the width 113W of the accommodation space 113 may be about 15.0 mm or more. According to exemplary embodiments, the width 113W of the accommodation space 113 may be about 17.0 mm or more. According to exemplary embodiments, the width 113W of the accommodation space 113 may be about 18.0 mm or more. According to exemplary embodiments, the width 113W of the accommodation space 113 may be about 20.0 mm or more. According to exemplary embodiments, the width 113W of the accommodation space 113 may be about 30.0 mm or less. According to exemplary embodiments, the width 113W of the accommodation space 113 may be about 24.0 mm or less. According to exemplary embodiments, the width 113W of the accommodation space 113 may be about 23.0 mm or less. According to exemplary embodiments, the width 113W of the accommodation space 113 may be about 22.0 mm or less.

The discharge space 114 may have a width 114W (or diameter). The width 114W of the discharge space 114 may be different from the width 113W of the accommodation space 113. The width 114W of the discharge space 114 may be smaller than the width 113W of the accommodation space 113. According to exemplary embodiments, the width 114W of the discharge space 114 may be about 10.0 mm or more. According to exemplary embodiments, the width 114W of the discharge space 114 may be about 12.0 mm or more. According to exemplary embodiments, the width 114W of the discharge space 114 may be about 13.5 mm or more. According to exemplary embodiments, the width 114W of the discharge space 114 may be about 16.0 mm or more. According to exemplary embodiments, the width 114W of the discharge space 114 may be about 25.0 mm or less. According to exemplary embodiments, the width 114W of the discharge space 114 may be about 23.0 mm or less. According to exemplary embodiments, the width 114W of the discharge space 114 may be about 19.5 mm or less. According to exemplary embodiments, the width 114W of the discharge space 114 may be about 17.0 mm or less.

The discharge space 114 may communicate with the accommodation space 113 through a plurality of holes 112H1, 112H2. Foreign substances in the accommodation space 113 may be discharged to the discharge space 114 through the plurality of holes 112H1, 112H2.

The holder 110 may further include a first hole 112H1 and second holes 112H2. The first hole 112H1 may be defined by the inner surface 112AIS of the support 112A. The second holes 112H2 may be between the support 112A and the third portion 111C. The second holes 112H2 may be separated by the bridges 112B. Each of the second holes 112H2 may be defined by the outer surface 112AOS of the support 112A, the inner surface 111CIS of the third portion 111C, and side surfaces 112BS of the bridges 112B.

According to exemplary embodiments, the second holes 112H2 may be arranged at equal spacings. However, the arrangement of the second holes 112H2 is not limited thereto, and the second holes 112H2 may be arranged at different spacings. Each of the second holes 112H2 may have substantially the same shape. Each of the second holes 112H2 may have different shapes.

FIG. 5 shows an embodiment including four second holes 112H2, but the number of second holes 112H2 is not limited thereto. The number of second holes 112H2 may be changed according to the size or shape of the electrode assembly 30.

According to exemplary embodiments, the number of second holes 112H2 may be 2 or more. According to exemplary embodiments, the number of second holes 112H2 may be 4 or more. According to exemplary embodiments, the number of second holes 112H2 may be 6 or more. According to exemplary embodiments, the number of second holes 112H2 may be 20 or less. According to exemplary embodiments, the number of second holes 112H2 may be 10 or less. According to exemplary embodiments, the number of second holes 112H2 may be 8 or less.

The first hole 112H1 may have a width 112H1W. According to exemplary embodiments, the width 112H1W of the first hole 112H1 may be about 2.0 mm or more. According to exemplary embodiments, the width 112H1W of the first hole 112H1 may be about 3.0 mm or more. According to exemplary embodiments, the width 112H1W of the first hole 112H1 may be about 4.5 mm or more. According to exemplary embodiments, the width 112H1W of the first hole 112H1 may be about 6.0 mm or more. According to exemplary embodiments, the width 112H1W of the first hole 112H1 may be about 12.0 mm or less. According to exemplary embodiments, the width 112H1W of the first hole 112H1 may be about 10.0 mm or less. According to exemplary embodiments, the width 112H1W of the first hole 112H1 may be about 8.5 mm or less. According to exemplary embodiments, the width 112H1W of the first hole 112H1 may be about 7.0 mm or less.

The electrode assembly holder 110 according to exemplary embodiments of the present disclosure includes the support 112A and the bridges 112B to support the plurality of segmented portions 12S at the lower end of the electrode assembly 130 and maintain the folded state of the plurality of segmented portions 12S. The plurality of holes 112H1, 112H2 can prevent excessive pressure from being applied to the plurality of segmented portions 12S of the non-coated part 12 of the electrode assembly 30. Accordingly, the electrode assembly 30 can be loaded and transported in the holder 110 without damage. In addition, since foreign substances in the accommodation space 113 can be discharged to the discharge space 114 through the plurality of holes 112H1, 112H2, contamination of the electrode assembly 30 can be prevented.

### (Second embodiment)

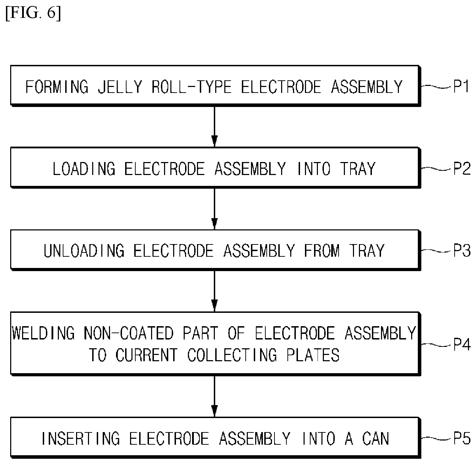

FIG. 6 is a flowchart showing a method of manufacturing a cylindrical battery 200 according to exemplary embodiments. FIG. 7 is a cross-sectional view showing a cylindrical battery 200 according to exemplary embodiments.

Referring to FIGS. 1 to 7 together, the method of manufacturing a cylindrical battery 200 may include a step P1 of forming a jelly roll-type electrode assembly 30. The jelly roll-type electrode assembly 30 may be formed by sequentially winding a first electrode 10, a separator, a second electrode 20, and a separator around a winding core. Segmented portions 12S of the non-coated part 12 of the first electrode 10 may be located at the lower end of the electrode assembly 30, and segmented portions 22S of the non-coated part 22 of the second electrode 20 may be located at the upper end of the electrode assembly 30. The segmented portions 12S, 22S of the non-coated parts 12, 22 at both ends of the electrode assembly 30 may be folded toward the winding center of the electrode assembly 30. According to exemplary embodiments, the cylindrical battery 200 may be a tab-less type battery.

The method of manufacturing a cylindrical battery 200 may include a step P2 of loading the electrode assembly 30 into the electrode tray 100. The electrode assembly 30 may be loaded into the holder 110 of the electrode tray 100. The segmented portions 12S of the non-coated part 12 located at the lower end of the electrode assembly 30 may be supported by the support 112A and the bridges 112B of each holder 110.

The method of manufacturing a cylindrical battery 200 may include a step P3 of unloading the electrode assembly 30 from the electrode tray 100, after transporting the electrode assembly 30 to a required position. The electrode tray 100 includes the support 112A, the bridges 112B, and the plurality of holes 112H1, 112H2, and thus can vertically load and transport the electrode assembly 30 without damaging the segmented portions 12S of the non-coated part 12.

The method of manufacturing a cylindrical battery 200 may include a step P4 of welding the segmented portions 12S, 22S of the non-coated parts 12, 22 of the electrode assembly 30 to the current collecting plates 205A, 205B, respectively. The segmented portions 12S of the non-coated part 12 of the electrode assembly 30 may be welded to the first current collecting plate 205A. The segmented portions 22S of the non-coated part 22 of the electrode assembly 30 may be welded to the second current collecting plate 205B.

The method of manufacturing a cylindrical battery 200 may include a step P5 of inserting the electrode assembly 30 into a can 201. Thereafter, the first current collecting plate 205A may be welded to the bottom part 201B of the can 201. The second current collecting plate 205B may be welded to a top cap 202. The can 201 may serve as a positive terminal connecting the cylindrical battery 200 to the outside. The top cap 202 may serve as a negative terminal connecting the cylindrical battery 200 to the outside.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. An electrode assembly holder comprising:
a hollow cylindrical side wall part, wherein the side wall part comprises a first portion defining an accommodation space, a second portion defining a discharge space, and a third portion interposed between the first portion and the second portion;
a support surrounded by the third portion and spaced apart from the third portion; and
bridges connecting the third portion and the support.

2. The electrode assembly holder of claim 1, wherein
the width of the accommodation space is different from the width of the discharge space.

3. The electrode assembly holder of claim 2, wherein
the width of the accommodation space is greater than the width of the discharge space.

4. The electrode assembly holder of claim 3, wherein
the width of the accommodation space is 18.0 mm or more,
the width of the accommodation space is 24.0 mm or less,
the width of the discharge space is 13.5 mm or more, and
the width of the discharge space is 19.5 mm or less.

5. The electrode assembly holder of claim 1, wherein
the inner surface of the third portion is aligned with the inner surface of the second portion in a vertical direction.

6. The electrode assembly holder of claim 1, wherein
the bridges are arranged at equal spacings.

7. The electrode assembly holder of claim 1, further comprising:
a first hole defined by the inner surface of the support; and
second holes between the support and the third portion.

8. The electrode assembly holder of claim 7, wherein
the second holes are separated by the bridges.

9. The electrode assembly holder of claim 7, wherein
each of the second holes is defined by the outer surface of the support, the inner surface of the third portion, and side surfaces of the bridges.

10. The electrode assembly holder of claim 7, wherein
the number of second holes is 2 or more and 10 or less.

11. The electrode assembly holder of claim 1, wherein
the support has a ring shape.

12. The electrode assembly holder of claim 7, wherein
the accommodation space communicates with the discharge space through the first hole and the second holes.

13. The electrode assembly holder of claim 1, wherein
the number of bridges is 2 or more and 10 or less.

14. The electrode assembly holder of claim 1, wherein
the accommodation space is configured to accommodate a jelly roll-type electrode assembly,
the electrode assembly comprises segmented portions of a non-coated part folded toward a winding center at both ends thereof, and
the bridges support the segmented portions of the non-coated part of the electrode assembly.

15. An electrode tray comprising:
a plurality of electrode assembly holders according to claim 1; and
a bottom plate supporting the electrode assembly holders from below.
